# EUROPEAN PATENT APPLICATION

(11) **EP 1 821 227 A1**
(43) Date of publication of application: **22.08.2007**
(21) Application number: 07102664.5
(22) Date of filing: 19.02.2007
(51) Int. Cl.: G06F 17/30

(54) **Information processing apparatus, information processing method, information processing program, and mobile terminal apparatus**

(30) Priority: 20.02.2006 JP 2006043023
(71) Applicant: Sony Ericsson Mobile Communications Japan, Inc., Tokyo (JP)
(72) Inventor: Nishio, Fumihiko c/o Sony Ericsson Mobile Com, Tokyo (JP)
(74) Representative: Mitscherlich, Hans

(57) **Abstract**

An information processing apparatus includes: an information storage 11; a relevant information detector detecting pieces of information having a predetermined relevance to one another from pieces of the information stored in the information storage; a relevancy information storage 10 storing relevancy information indicating that the detected pieces of information are pieces of information having the predetermined relevance to one another; and an information processor 12 for providing access control to a desired piece of information in the information stored in the information storage if the processing for providing access control to the desired piece of information is designated, and for detecting another piece of information having the relevance to the desired piece of information for which the processing for providing access control is designated, on the basis of the relevancy information stored, and performing the processing for providing access control to the detected other piece of information having the relevance.

## Description

### BACKGROUND OF THE INVENTION

### 1. FIELD OF THE INVENTION

The present invention relates to an information processing apparatus, an information processing method, an information processing program, and a mobile terminal apparatus, which are suitable for application to, for example, mobile telephones, PHS mobile telephones (PHS: Personal Handyphone System), PDA terminals (PDA: Personal Digital Assistant), and notebook and desktop types of personal computers.

### 2. DESCRIPTION OF RELATED ART

Japanese Patent Application Publication Number 2001-43240 (for example, Page 5, Figs. 4 and 5) discloses an information processing apparatus which is intended to facilitate the operation of adding information such as a keyword during digital photographing of a image and to permit sharing of management information on digital image data and schedule data.

The information processing apparatus stores image information of a subject in a memory when an image of the subject is captured by a camera module, and detects from a scheduler the presence or absence of a schedule corresponding to the date and time of capturing of the image of the subject and, if such a schedule exists, extracts a task stored in a task storage area of the scheduler as a keyword and stores the keyword in a keyword area.

When keyword entering processing or keyword addition processing is designated for the image information, the information processing apparatus reads the keyword corresponding to the image information, stored in the keyword area, and automatically adds the keyword to the image information. Accordingly, the information processing apparatus can use the task stored in the scheduler as the keyword added to the captured image information, thereby omitting the complicated operation of entering the keyword for the image information.

Conversely, if entering or addition of a keyword is performed on image information, the information processing apparatus registers the entered keyword in the scheduler as a schedule item corresponding to the date and time of capturing of the image. Accordingly, if a keyword is entered or added for a captured image, the information processing apparatus can reflect the keyword in the scheduler to avoid the inconvenience of separately entering the same information for image management and schedule management.

### SUMMARY OF THE INVENTION

The current mobile telephones are provided with a multiplicity of functions such as a camera function, an electronic mail function and a scheduler, and there exist mutually relevant information between different functions such as "a schedule registered in the schedule function and image information captured by the camera function during the execution of the schedule" and "a transmitted/received electronic mail and image information attached to the electronic mail".

In many cases, if desired processing is performed on one piece of information from among mutually relevant pieces of information, the desired processing is performed on another piece of information. For example, if deletion processing is performed on text information on a transmitted/received electronic mail, image information attached to the electronic mail is also subjected to similar deletion processing. If the private setting processing of inhibiting display unless a correct password is entered, similar private setting processing is also performed on image information captured by the camera function during the execution of the desired schedule. In these case, it is complicated to separately perform processing on one and another pieces of information.

Accordingly, it is desirable to provide an information processing apparatus, an information processing method, an information processing program, and/or a mobile terminal apparatus, which are capable of omitting or reducing a complicated process which requires to separately perform the same processing on individual pieces of information having a mutual relevance, by performing designated processing in a batched manner on plural pieces of information relevant to one another. The present invention has been made in view of the above-mentioned issue.

According to one embodiment of the present invention, there is provided an information processing apparatus which includes: information storage means for storing information; relevant information detection means for detecting pieces of information having a predetermined relevance to one another from pieces of the information stored in the information storagemeans; relevancy information storagemeans for storing relevancy information indicating that the detected pieces of information are pieces of information having the predetermined relevance to one another, detected by the relevant information detection means; and information processing means for performing processing for providing access control to a desired piece of information in the information stored in the information storage means if the processing for providing access control to the desired piece of information is designated, and further detecting another piece of information having the relevance to the desired piece of information for which the processing for providing access control is designated, on the basis of the relevancy information stored in the relevancy information storage means, and performing the processing for providing access control to the detected other piece of information having the relevance.

According to another embodiment of the present invention, there is provided an information processing method which includes: causing relevant information detection means to detect pieces of information having a predetermined relevance to one another from pieces of the information stored in the information storage means,and causing relevancyinformationstorage means to store relevancy information indicating that the detected pieces of information are pieces of information having the predetermined relevance to one another; and causing information processing means to perform processing for providing access control to a desired piece of information in the information stored in the information storage means if the processing for providing access control to the desired piece of information is designated, and further detecting another piece of information having the relevance to the desired piece of information for which the processing for providing access control is designated, on the basis of the relevancy information stored in the relevancy information storage means, and performing the processing for providing access control to the detected other piece of information having the relevance.

According to another embodiment of the present invention, there is provided an information processing program which causes a computer to function as: relevancy information storage means for detecting pieces of information having a predetermined relevance to one another from pieces of the information stored in the information storage means, and causing relevancy information storage means to store relevancy information indicating that the detected pieces of information are pieces of information having the predetermined relevance to one another; and information processing means for performing processing for providing access control to a desired piece of information in the information stored in the information storage means if the processing for providing access control to the desired piece of information is designated, and detecting another piece of information relevant to the desired piece of information for which the processing for providing access control is designated, on the basis of the relevancy information stored in the relevancy information storage means, and performing the processing for providing access control to the detected other piece of information having the relevance.

According to another embodiment of the present invention, there is provided a mobile terminal apparatus which includes: information storage means for storing information; relevant information detection means for detecting pieces of information having a predetermined relevance to one another from pieces of the information stored in the information storage means; relevancy information storage means for storing relevancy information indicating that the detected pieces of information are pieces of information having the predetermined relevance to one another, detected by the relevant information detection means; and information processing means for performing processing for providing access control to a desired piece of information in the information stored in the information storage means if the processing for providing access control to the desired piece of information is designated, and detecting another piece of information having the relevance to the desired piece of information for which the processing for providing access control is designated, on the basis of the relevancy information stored in the relevancy information storage means, and performing the processing for providing access control to the detected other piece of information having the relevance.

According to the above-mentioned embodiments of the present invention, if processing for providing access control to a desired piece of information in the information stored in the information storage means, the information processing means performs the processing for providing access control to the desired piece of information, and detects another piece of information relevant to the desired piece of information for which the processing for providing access control is designated, on the basis of the relevancy information stored in the relevancy information storage means, and performs the processing for providing access control to the detected other piece of information having the relevance, thereby performing batch access control to plural pieces of information having a mutual relevance.

The above-mentioned embodiments of the present invention is capable of performing batch access control processing on plural pieces of information relevant to one another. Accordingly, it is possible to omit or reduce a complicated process which requires to separately perform the same processing on individual pieces of information having a mutual relevance.

### BRIEF DESCRIPTION OF THE DRAWINGS

The invention will become more readily appreciated and understood from the following detailed description of the embodiment and modification of the invention when taken in conjunction with the accompanying drawings, in which:
Fig. 1 is a block diagram of a mobile telephone according to an embodiment of the present invention;
Fig. 2 is a flowchart aiding in explaining operation of extracting a relevance between individual pieces of information in a mobile telephone according to an embodiment of the present invention;
Fig. 3 is a flowchart aiding in explaining the processing of mutually relating individual pieces of information in a mobile telephone according to an embodiment of the present invention; and
Fig. 4 is a flowchart aiding in explaining a batch processing operation in a mobile telephone according to an embodiment of the present invention.

### DETAILED DESCRIPTION OF EMBODIMENT

A mobile telephone to which an embodiment of the present invention is applied will be described below in detail with reference to the accompanying drawings.

### STRUCTURE OF MOBILE TELEPHONE:

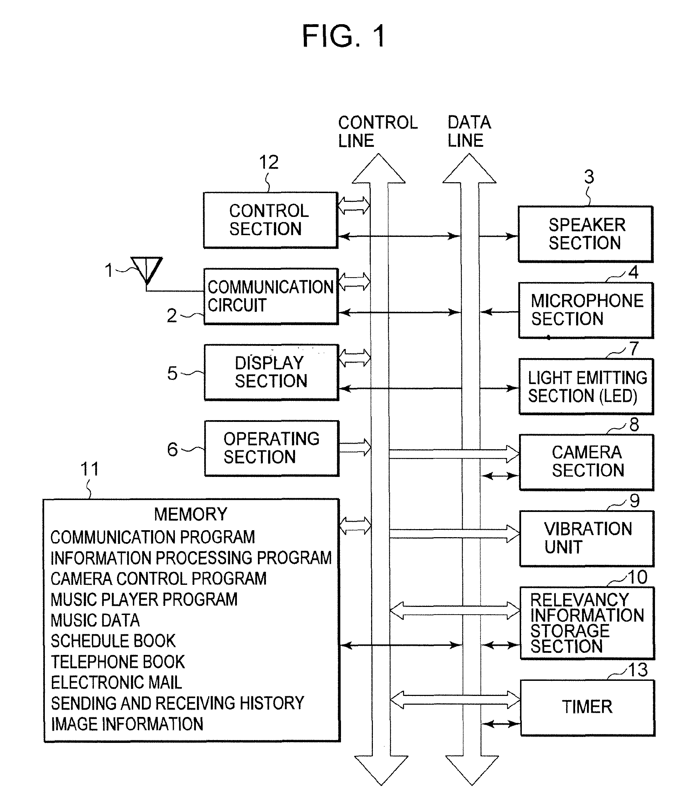

The mobile telephone according to the embodiment of the present invention, as shown in Fig. 1, includes an antenna 1 and a communication circuit 2 for performing wireless communication with a base station, a speaker section 3 for producing audio outputs such as a ring tone and a received incoming voice or sound, a microphone section 4 for collecting voice or sound to be transmitted, a display section 5 for displaying images (such as moving images and still images), characters, and the like, an operating section 6 for permitting a user to perform operations such as entering of letters and selecting of a desired menu item, and a light emitting section (LED: Light Emitting Diode) 7 for informing the user of incoming and outgoing calls and the like by emitting light.

The mobile telephone also includes a camera section 8 for capturing a still image or a moving image of a desired subject, a vibration unit 9 for vibrating the body of the mobile telephone and informing the user of incoming and outgoing calls and the like, a memory 11 which stores various programs, various kinds of information, and the like, a relevancy information storage section 10 for storing relevancy information indicative of the relevance between the various pieces of information stored in the memory 11, a control section 12 for controlling the operation of the entire mobile telephone, and a timer 13 for counting the current date and time.

The memory 11 stores a communication processing program (a communication program) for performing wireless communication processing via a base station, an information processing program capable of performing batch processing on the various pieces of information each having a mutual relevance which will be mentioned later, a camera control program for controlling the image capture operation of the camera section 8, a music player program for playing music data, music data to be played by the music player program, a schedule book in which the user's desired schedules were registered at the user's desired dates and times, a telephone book in which the telephone number, the electronic mail and the like of each individual user were registered, the data of transmitted and received electronic mails, the sending and receiving history of telephone calls and electronic mails, image information representative of a moving image or a still image captured by the camera section 8 or attached to a transmitted or received electronic mail, and the like.

### EXTRACTION OF RELEVANCE:

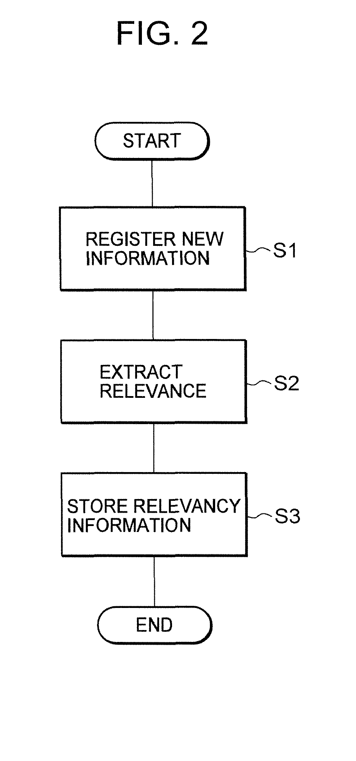

The mobile telephone according to the embodiment of the present invention is constructed such that if processing for providing access control to a desired piece of information in the information stored in the memory 11 is designated, the mobile telephone performs processing for providing batch access control to the desired piece of information for which the processing is designated and to information having relevance to the desired piece of information. To enable this batch processing, the mobile telephone needs to detect in advance the relevance between individual pieces of information. Fig. 2 shows a flowchart of the operation of extracting the relevance.

The flowchart of Fig. 2 is executed by the control section 12 on the basis of the information processing program stored in the memory 11, when new information is stored in the memory 11, such as when image capture is performed by the camera section 8, when a desired schedule is entered, when attached information such as music data or image information attached to a transmitted or received electronic mail is detected, or when an electronic mail address of a new user is entered.

Referring to the flowchart of Fig. 2, in step S1, the control section 12 controls the memory 11 to store new information such as image information (a moving image or a still image) captured by the camera section 8, an entered desired schedule, a transmitted or received electronic mail and its attached information such as music data or image information, or an entered electronic mail address of a new user, and causes the process to proceed to step S2.

When controlling the memory 11 to store such new information, the control section 12 adds unique identification information to the new information, and also adds date and time information indicative of the recording date and time to the new information as needed, and controls the memory 11 to store the added information as well. For example, the control section 12 adds the identification information to the image information captured by the camera section 8, and also adds date and time information indicative of the date and time of image capturing. In the case of the entered schedule, the control section 12 adds identification information unique to each individual schedule to the field of the date and the time period designated by the user, and causes the memory 11 to store the entered schedule and the added identification information. In the case of the transmitted or received electronic mail, the control section 12 adds date and time information indicative of its transmission or reception date and time to the electronic mail, and also adds identification information unique to each electronic mail to the electronic mail, and causes the memory 11 to store the electronic mail and the date and time information as well as the added identification information. In the case of the attached information, such as music data or image information, attached to the electronic mail, the control section 12 adds to the attached information the data and time information indicative of the date and time of transmission or reception of the electronic mail as well as the identification information, and causes the memory 11 to store the attached information and the date and time information as well as the identification information.

In step S2, the control section 12 detects from the memory 11 other information relevant to the new information stored in the memory 11 . Furthermore, in step S3, the control section 12 causes the memory 11 to store the information newly stored in the memory 11 and the relevancy information detected in step S2, indicative of a relevance to the new information, in a relevancy information storage section 10 shown in Fig. 1. Thus, the control section 12 completes the processing shown in the flowchart of Fig. 2.

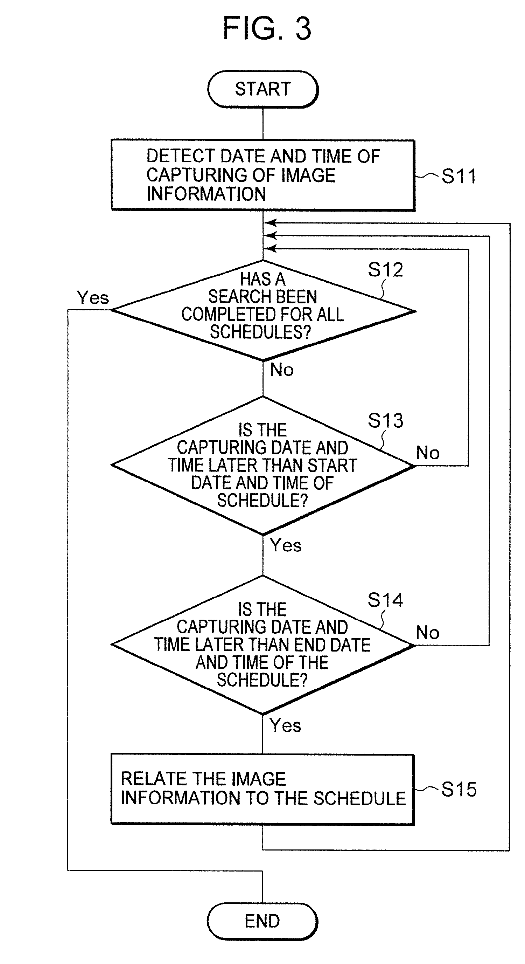

The processing of mutually relating the various pieces of information to one another as mentioned above in steps S2 and S3 will be described below with illustrative reference to the processing of mutually relating the image information captured by the camera section 8 and the schedules registered in the schedule book. This illustrative relating processing has the flow shown in the flowchart of Fig. 3.

The flowchart of Fig. 3 is started when a desired subject is captured by the camera section 8, and the process starts from step S11. When the desired subject is captured by the camera section 8, the control section 12 controls the memory 11 to store the image information (refer to step S1 in the flowchart of Fig. 2), and at this time adds date and time information counted by the timer 13 to the image information and controls the memory 11 to store the image information and the date and time information. In step S11, the control section 12 detects the date and time of capturing of the image information by detecting the date and time information added to the image information stored in the memory 11, and causes the process to proceed to step S12.

Furthermore, the control section 12 searches for a schedule corresponding to the date and time of the image information as will be described below in connection with steps S13 and S14. This search is performed by sequentially comparing the date and time added to the image information with the date and time of each schedule registered in the schedule book. Accordingly, in step S12, the control section 12 determines whether this search processing has been completed for all schedules registered in the schedule book. Until the search processing is completed for all schedules, the control section 12 repeatedly executes the processing of steps S13 to S15 which will be described below.

Specifically, the control section 12 causes the process to proceed to step S13, and compares the date and time added to the image information with the schedule start date and time of a schedule which is the first targeted schedule, thereby determining whether the date and time added to the image information is later than the schedule start date and time of the first targeted schedule. If the date and time added to the image information is later than the schedule start date and time of the first targeted schedule, there is a possibility that the image was captured during the execution of the schedule. Accordingly, if the control section 12 determines that the date and time added to the image information is later than the schedule start date and time of the schedule, the control section 12 causes the process to proceed to step S14.

In addition, if the control section 12 determines that the date and time added to the image information is earlier than the schedule start date and time of the schedule, it indicates that the image is not an image captured during the execution of the schedule. Accordingly, in this case, the control section 12 returns the process to step S12, and determines whether this search processing has been completed for all schedules registered in the schedule book. If the control section 12 determines that this search processing has not yet been completed for all schedules registered in the schedule book, the control section 12 causes the process to proceed to step S13, and compares the date and time added to the image information with the schedule start date and time of a schedule which is the second targeted schedule.

Furthermore, if the control section 12 determines that the date and time added to the image information is later than the schedule start date and time of the first targeted schedule, and causes the process to proceed to step S14, the control section 12 determines whether the date and time added to the image information is earlier than the schedule end date and time of the first targeted schedule.

If the control section 12 determines that the date and time added to the image information is later than the schedule start date and time of the schedule (step S13) and is earlier than the schedule end date and time of the schedule (step S14), it indicates that the capturing of the image was performed during the execution of the schedule. Accordingly, if the control section 12 determines in step S14 that the date and time added to the image information is earlier than the schedule end date and time of the schedule, the control section 12 causes the process to proceed to step S15, and mutually relates the identification information on the image information and the identification information on the schedule and causes the relevancy information storage section 10 to store both identification information. In this manner, the identification information indicative of the predetermined schedule and the identification information on the image information captured by the camera section 8 during the execution of the schedule are stored in the relevancy information storage section 10 as "relevancy information".

After having performed control to store the relevancy information in the above-mentionedmanner, the control section 12 returns the process to step S12, and repeatedly executes the processing of steps S13 to S15 until the control section 12 determines in step S12 that the search processing has been completed for all schedules registered in the schedule book.

### EXTRACTION OF OTHER RELEVANCE:

The above-mentioned example is the operation of extracting the relevance between the identification information captured by the camera section 8 and the schedules registered in the schedule book. In addition, if attached information such as image information or music data is added to a transmitted or received electronic mail, the control section 12 controls the relevancy information storage section 10 to store as the above-mentioned relevancy information both identification information added to the attached information and identification information on the electronic mail to which the attached information is added. The control section 12 performs the operation of extracting other similar relevance in this manner, thereby causing the relevancy information storage section 10 to store and manage relevancy information indicative of the relevance between all information stored in the memory 11.

### BATCH PROCESSING:

When the relevancy information indicative of the relevance between each information is stored in the relevancy information storage section 10, processing designated for one piece of information can be performed in a batched manner on another piece of information relevant to the one piece of information.

### PRIVATE PROCESSING (REPRODUCING CONTROL PROCESSING):

First, the mobile telephone according to the embodiment of the present invention performs private setting on a desired piece of information such that identification information and an electronic mail provided with private settings cannot be displayed on the display section 5 unless a correct password is entered, and such that music data provided with private settings cannot be played unless a correct password is entered. When the private setting is performed on the desired piece of information in this manner, the mobile telephone according to the embodiment of the present invention also performs private setting on another piece of information relevant to the desired piece of information in a batched manner.

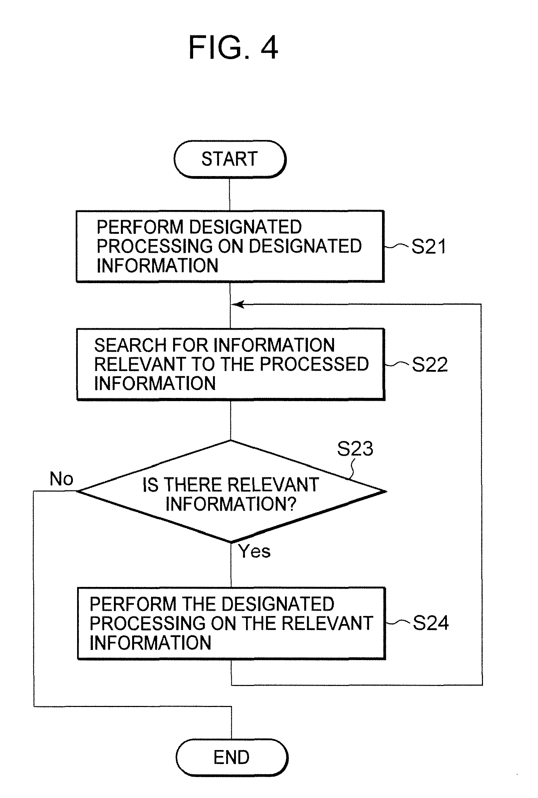

The flow of this batch processing operation is shown in the flowchart of Fig. 4. This flowchart of Fig. 4 is started by the control section 12 on the basis of the information processing program stored in the memory 11, when a desired piece of information is selected by the user and desired processing is designated for the selected piece of information.

### PRIVATE SETTING FOR SCHEDULE:

The following description is given on the assumption that the user has designated private processing for a schedule corresponding to the desired date and time in the schedule book.

First, in step S21, the control section 12 performs processing such as setting a flag indicative of the fact that the private setting has been performed on the schedule designated by the user, for example, the corresponding one of the schedules registered in the schedule book, and causes the process to proceed to step S22.

In step S22, the control section 12 searches the relevancy information storage section 10 on the basis of identification information on the schedule for which the flag has been set (i.e., the schedule on which the private setting has been performed), thereby performing a search for information relevant to the schedule on which the private setting has been performed. As mentioned previously, identification information on individual pieces of information each having a relevance to others are stored in the relevancy information storage section 10. Accordingly, the control section 12 searches the relevancy information storage section 10, and in step S23, makes a decision as to the presence or absence of identification information relevant to the identification information on the schedule on which the private processing has been performed in step S21.

If the control section 12 does not detect identification information relevant to the identification information on the schedule on which the private processing has been performed, it indicates that there does not exist information relevant to the schedule on which the private processing has been performed. Accordingly, the control section 12 immediately completes the batch processing shown in the flowchart of Fig. 4.

Conversely, if the control section 12 detects identification information relevant to the identification information on the schedule on which the private processing has been performed, the control section 12 causes the process to proceed to step S24 and performs private processing such as setting a flag for image information (or music data) to which the detected identification information is added.

In addition, to cope with the case in which plural pieces of image information and the like are relevant to one schedule, the control section 12 returns the process to step S22 after having performed the private processing on the image information or the like relevant to the above-mentioned schedule, and again searches the relevancy information storage section 10 on the basis of the identification information on the schedule, thereby searching for new information relevant to the schedule. If new information cannot be detected in step S23, the control section 12 completes the batch processing shown in the flowchart of Fig. 4. Accordingly, if private setting is performed on a desired schedule, private setting can be performed in a batched manner on another piece of information such as image information or music data relevant to the schedule.

### PRIVATE SETTING FOR IMAGE INFORMATION:

The operation of performing private setting on a schedule relevant to a desired piece of image information when private setting is performed on the desired piece of image information by the user will be described below with reference to the flowchart of Fig. 4.

In this case, in step S21, the control section 12 performs private processing such as setting the above-mentioned flag for image information designated by the user, and in step S22 searches the relevancy information storage section 10 on the basis of identification information on the image information on which the private processing has been performed. Furthermore, in step S23, the control section 12 makes a decision as to the presence or absence of identification information relevant to the identification information on the image information on which the private processing has been performed in step S21.

If the identification information relevant to the identification information on the image information is identification information on a schedule, the control section 12, in step S24, performs private processing such as setting the above-mentioned flag for the schedule to which the detected identification information is added. Accordingly, if private setting is performed on a desired piece of image information, private setting can be performed in a batched manner on a schedule relevant to the image.

### PRIVATE SETTING FOR ATTACHED INFORMATION:

The operation of performing private setting on a transmitted or received electronic mail having attached information (image information or music data) when private setting is performed on the attached information by the user will be described below with reference to the flowchart of Fig. 4.

In this case, in step S21, the control section 12 performs private processing such as setting the above-mentioned flag for attached information designated by the user, and in step S22 searches the relevancy information storage section 10 on the basis of identification information on the attached information on which the private processing has been performed. Furthermore, in step S23, the control section 12 makes a decision as to the presence or absence of identification information relevant to the identification information on the image information on which the private processing has been performed in step S21, and in step S24 performs private processing such as setting the above-mentioned flag for an electronic mail corresponding to the identification information relevant to the attached information. Accordingly, if private setting is performed on a desired piece of attached information, private setting can be performed in a batched manner on an electronic mail having the desired piece of attached information.

### PRIVATE SETTING FOR ELECTRONIC MAIL:

The operation of performing private setting on information attached to a transmitted or received electronic mail when private setting is performed on the electronic mail by the user will be described below with reference to the flowchart of Fig. 4.

In this case, in step S21, the control section 12 performs private processing such as setting the above-mentioned flag for an electronic mail designated by the user, and in step S22 searches the relevancy information storage section 10 on the basis of identification information on the electronic mail on which the private processing has been performed. Furthermore, in step S23, the control section 12 makes a decision as to the presence or absence of identification information relevant to the identification information on the electronic mail on which the private processing has been performed in step S21, and in step S24 performs private processing such as setting the above-mentioned flag for attached information corresponding to the identification information relevant to the electronic mail. Accordingly, if private setting is performed on a desired electronic mail, private setting can be performed in a batched manner on information attached to the electronic mail.

### PRIVATE SETTING FOR DESIRED ADDRESS:

The operation of performing private setting on both a desired electronic mail and information attached to the electronic mail when private setting is performed on the address of the electronic mail by the user will be described below with reference to the flowchart of Fig. 4.

In this case, the control section 12 performs private processing such as setting the above-mentioned flag for an address designated by the user from among the addresses stored in the telephone book of the memory 11, and searches for an electronic mail having the address on which the private processing has been performed, from among the electronic mails stored in the memory 11.

The control section 12, in step S21, performs private processing on the electronic mail having the address, and in step S22 searches the relevancy information storage section 10 on the basis of identification information on the electronic mail on which the private processing has been performed. Furthermore, in step S23, the control section 12 makes a decision as to the presence or absence of identification information relevant to the electronic mail, and in step S24 performs private processing such as setting the above-mentioned flag for attached information corresponding to the identification information relevant to the electronic mail. Accordingly, if private setting is performed on a desired address, private setting can be performed in a batched manner on both an electronic mail having the address and information attached to the electronic mail.

### DELETION PROCESSING:

The mobile telephone according to the embodiment of the present invention is also constructed such that when deletion of a desired piece of information is designated, another piece of information relevant to the information whose deletion is designated is also subjected to deletion processing in a batched manner. The operation of performing deletion processing on both a desired electronic mail and information attached to the electronic mail when deletion processing is performed on the electronic mail by the user will be described below with reference to the flowchart of Fig. 4.

In this case, the control section 12, in step S21, performs the processing of deleting an electronic mail designated by the user from the memory 11, and in step S22 searches the relevancy information storage section 10 on the basis of identification information on the deleted electronic mail. Furthermore, in step S23, the control section 12 makes a decision as to the presence or absence of identification information relevant to the identification information on the electronic mail on which the deletion processing has been performed in step S21, and in step S24 performs deletion processing on attached information corresponding to the identification information relevant to the electronic mail. Accordingly, if deletion processing is performed on a desired electronic mail, deletion processing can also be performed in a batched manner on information attached to the electronic mail.

In the above-mentioned example, if deletion processing is performed on an electronic mail, deletion processing is also performed on information attached to the deleted electronic mail. Conversely, if deletion processing is performed on attached information, the control section 12 also performs deletion processing on an electronic mail having the attached information. In addition, if deletion processing of a desired address is designated, the control section 12 performs batch deletion processing of an electronic mail having the address and information attached to the electronic mail. Inaddition, if deletion processing of image information is designated, the control section 12 also performs the processing of deleting a schedule relevant to the image information from the schedule book. Conversely, if deletion processing of a schedule is designated, the control section 12 also performs the processing of deleting image information relevant to the schedule.

### PROTECTION PROCESSING:

The mobile telephone according to the embodiment of the present invention is also constructed such that when protection processing for protecting a desired piece of information from erroneous erasure is designated, another piece of information relevant to the information whose protection is designated is also subjected to protection processing in a batchedmanner. The operation of performing protection processing on both a desired electronic mail and information attached to the electronic mail when protection processing is performed on the electronic mail by the user will be described below with reference to the flowchart of Fig. 4.

In this case, the control section 12, in step S21, performs protection processing such as setting a flag indicating that information to be protected is an electronic mail designated by the user, and in step S22 searches the relevancy information storage section 10 on the basis of identification information on the protected electronic mail. Furthermore, in step 523, the control section 12 makes a decision as to the presence or absence of identification information relevant to the identification information on the electronic mail on which the protection processing has been performed in step S21, and in step S24 performs protection processing on attached information corresponding to the identification information relevant to the electronic mail. Accordingly, if protection processing is performed on a desired electronic mail, protection processing can also be performed in a batched manner on information attached to the electronic mail, so that both information can be protected from erroneous erasure.

In the above-mentioned example, if protection processing is performed on an electronic mail, protection processing is also performed on information attached to the deleted electronic mail. Conversely, if protection processing is performed on attached information, the control section 12 also performs protection processing on an electronic mail having the attached information. In addition, if protection processing of a desired address is designated, the control section 12 performs batch protection processing of an electronic mail having the address and information attached to the electronic mail. In addition, if protection processing of image information is designated, the control section 12 performs the processing of protecting a schedule relevant to the image information. Conversely, if protection processing of a schedule is designated, the control section 12 performs the processing of protecting image information relevant to the schedule.

### INQUIRY CONCERNING WHETHER OR NOT TO PERFORM PROCESSING:

As mentioned above, the mobile telephone according to the embodiment of the present invention is constructed such that if desired processing is designated for one piece of information, the desired processing can be performed on another piece of information relevant to the one piece of information. However, there is also a case where the user does not wish to apply the designated processing to another piece of information. For this reason, the mobile telephone may also be adapted to ask the user whether or not to perform the processing on another piece of information, before the processing is performed on the other piece of information.

In this case, in step S21 of the flowchart of Fig. 4, the control section 12 performs processing designated by the user on information selected by the user, and in step S23, if information relevant to the processed information is detected, the control section 12 controls the display section 5 to display a message indicative of an inquiry about batch processing, such as "Relevant information has been found. Do you wish to process this information together? Yes/No".

The user operates the operating section 6 in response to such message to enter an answer about whether to perform the batch processing, and if the control section 12 detects an operation indicative of the user's agreement to the batch processing, the control section 12 also performs the processing on the relevant information in step S24. In addition, if the control section 12 detects an operation indicative of the user's disagreement to the batch processing, the control section 12 completes the processing of the flowchart of Fig. 4 without performing the processing on the relevant information. During the execution of the batch processing, the control section 12 can reflect the user's intention in the batch processing by asking the user.

As is apparent from the foregoing description, the mobile telephone according to the embodiment of the present invention, when desired processing is designated for one piece of information, can perform the desired processing on both the one piece of information and another piece of information relevant to the one piece of information in a batched manner. Accordingly, it is possible to omit a complicated process which separately performs the same processing on individual pieces of information having a mutual relevance.

In addition, the control section 12 is adapted to ask the user whether to perform the processing, before the processing is performed on the other piece of information, so that the control section 12 can prevent the issue of erroneously applying the processing to the other piece of information and can reflect the user's intention in the batch processing.

### MODIFICATION:

The above description of the embodiment has referred to an example in which the present invention is applied to a mobile telephone, but the present invention can also be applied to various terminals other than mobile telephones, for example, PHS mobile telephones (PHS: Personal Handyphone System), PDA terminals (PDA: Personal Digital Assistant), and notebook and desktop types of personal computers. In this case as well, the present invention can attain the same advantages as the above-mentioned embodiment.

The present specification contains subject matter related to Japanese Patent Application JP 2006-043023 filed in the Japanese Patent Office on January 20, 2006, the entire contents of which being incorporated herein by reference.

As a matter of course, the present invention is not limited to the above-mentioned embodiment and modification which are herein disclosed merely as one example for illustrative purposes. Accordingly, it can be readily understood that the present invention can be changed in various ways according to design and the like even in the case of a construction other than the above-mentioned embodiment or modification without departing from the technical scope of the present invention.

## Claims

1. An information processing apparatus comprising:
information storage means (11) for storing information;
relevant information detection means for detecting pieces of information having a predetermined relevance to one another from pieces of the information stored in the information storage means;
relevancy information storage means (10) for storing relevancy information indicating that the detected pieces of information are pieces of information having the predetermined relevance to one another, by the relevant information detection means; and
information processing means (12) for performing processing for providing access control to a desired piece of information in the information stored in the information storage means if the processing for providing access control to the desired piece of information is designated, and for detecting another piece of information having the relevance to the desired piece of information for which the processing for providing access control is designated, on the basis of the relevancy information stored in the relevancy information storage means, and performing the processing for providing access control to the detected other piece of information having the relevance.

2. An information processing apparatus according to claim 1, wherein:
if reproducing control processing for controlling reproducing of a piece of information is designated as the processing for providing access control, the information processing means performs reproducing control processing on the piece of information, and detects another piece of information relevant to the piece of information for which the reproducing control processing is designated, on the basis of the relevancy information stored in the relevancy information storage means, and performs the reproducing control processing on the detected piece of information having the relevance.

3. An information processing apparatus according to claim 1, wherein:
if information protection processing which does not perform deletion of a piece of information unless a predetermined operation is performed, even if the piece of information is information for which deletion is designated, is designated as the processing for providing access control, the information processing means performs the information protection processing on the designated piece of information, and detects another piece of information relevant to the piece of information for which the information protection processing is designated, on the basis of the relevancy information stored in the relevancy information storage means, and performs the information protection processing on the detected piece of information having the relevance.

4. An information processing apparatus according to claim 1, 2 or 3, wherein:
the information storage means stores schedules respectively registered with respect to desired dates and time periods in a schedule book, and pieces of recording information to each of which date and time information indicative of a recording date and time is added;
the relevant information detection means detects pieces of recording information each having date and time information belonging to the time period of a respective one of the schedules, on the basis of the dates and time periods of the respective schedules registered in the schedule book and the date and time information added to the respective pieces of recording information;
the relevancy information storage means stores as the relevancy information identification information on the schedules detected by the relevant information detection means and identification information on the pieces of recording information belonging to the time periods of the respective schedules;
the information processing means performs the processing for providing access control on a desired schedule from among the schedules stored in the information storage means, if the processing for providing access control is designated for the desired schedule, and detects from the relevancy information storage means identification information on a piece of the recording information relevant to identification information on the designated desired schedule and performs the processing for providing access control on the piece of recording information detected from the relevancy information storage means from pieces of recording information stored in the information storage means; and/or
the information processing means performs the processing for providing access control on a desired piece of recording information from pieces of the recording information stored in the information storage means, if the processing for providing access control is designated for the desired piece of recording information, and detects from the relevancy information storage means identification information on a schedule of the schedules relevant to identification information on the designated desired piece of recording information and performs the processing for providing access control on the schedule having the identification information detected from the relevancy information storage means from among all schedules of the schedule book stored in the information storage means.

5. An information processing apparatus according to one of the claims 1 to 4, wherein:
the information storage means stores transmitted and/or received electronic mails and attached information to each piece of which the transmission and/or reception date and time of a respective one of the electronic mails is added;
the relevant information detection means detects attached information to each piece of which is added the same transmission and/or reception date and time as the transmission and/or reception date and time of any one of the transmitted and/or received electronic mails;
the relevancy information storage means stores as the relevancy information address information indicative of sources of the electronic mails detected by the relevant information detection means and identification information on the attached information attached to the transmitted and/or received electronic mails;
the information processing means performs the processing for providing access control on a desired transmitted and/or received electronic mail from among the transmitted and/or received electronic mails stored in the information storage means, if the processing for providing access control is designated for the desired electronic mail, and detects from the relevancy information storage means identification information on the attached information relevant to the designated electronic mail on the basis of identification information on the designated electronic mail and performs the processing for providing access control on attached information having the identification information detected from the relevancy information storage means from among the attached information stored in the information storage means; and/or
the information processing means performs the processing for providing access control on a desired piece of the attached information stored in the information storage means, if the processing for providing access control is designated for the desired piece of attached information, and detects from the relevancy information storage means identification information on an electronic mail relevant to the desired piece of attached information on the basis of identification information on the desired piece of attached information and performs the processing for providing access control on an electronic mail having the identification information detected from the relevancy information storage means from among all electronic mails stored in the information storage means.

6. An information processing apparatus according to one of the claims 1 to 5, wherein:
the information storage means stores an address book in which address information on electronic mails are stored, text information on transmitted and/or received electronic mails, and attached information to each piece of which the transmission and/or reception date and time of a respective one of the electronic mails is added;
the relevant information detection means detects attached information to each piece of which is added the same transmission and/or reception date and time as the transmission and/or reception date and time of any one of the transmitted and/or received electronic mails;
the relevancy information storage means stores as the relevancy information address information indicative of sources of the electronic mails detected by the relevant information detection means and identification information on the attached information attached to the transmitted and/or received electronic mails;
the information processing means performs the processing for providing access control on all electronic mails having desired address information stored in the address book from among the electronic mails stored in the information storage means, if the processing for providing access control to a transmitted and/or received electronic mail is designated in accordance with the desired address information stored in the address book, and detects from the relevancy information storage means identification information on all attached information relevant to the electronic mails subjected to the processing for providing access control, on the basis of the identification information on the electronic mails subjected to the processing, and performs the processing for providing access control on attached information having the identification information detected from the relevancy information storage means from among the attached information stored in the information storage means; and/or
the information processing means performs the processing for providing access control on a desired piece of the attached information stored in the information storage means, if the processing for providing access control is designated for the desired piece of attached information, and detects from the relevancy information storage means address information relevant to the desired piece of attached information on the basis of identification information on the desired piece of attached information and performs the processing for providing access control on both electronic mails having the address information detected from the relevancy information storage means from among all electronic mails stored in the information storage means and attached information attached to the electronic mails having the address information.

7. An information processing apparatus according to one of the claims 1 to 6, wherein the information processing means, if the processing for providing the access control is designated, outputs a message inquiring whether the processing for providing access control is to be performed on the pieces of information having the predetermined relevance, and if an agreement to execution of the processing on the pieces of information having the predetermined relevance is entered, performs the processing for providing access control on the pieces of information having the predetermined relevance.

8. An information processing method comprising:
causing relevant information detection means to detect pieces of information having a predetermined relevance to one another from pieces of the information stored in the information storage means, and causing relevancy information storage means to store relevancy information indicating that the detected pieces of information are pieces of information having the predetermined relevance to one another; and
causing information processing means to perform processing for providing access control to a desired piece of information in the information stored in the information storage means if the processing for providing access control to the desired piece of information is designated, and further detecting another piece of information having the relevance to the desired piece of information for which the processing for providing access control is designated, on the basis of the relevancy information stored in the relevancy information storage means, and performing the processing for providing access control to the detected other piece of information having the relevance.

9. An information processing program which causes a computer to function as:
relevancy information storage means for detecting pieces of information having a predetermined relevance to one another from pieces of the information stored in the information storage means, and causing relevancy information storage means to store relevancy information indicating that the detected pieces of information are pieces of information having the predetermined relevance to one another; and
information processing means for performing processing for providing access control to a desired piece of information in the information stored in the information storage means if the processing for providing access control to the desired piece of information is designated, and detecting another piece of information relevant to the desired piece of information for which the processing for providing access control is designated, on the basis of the relevancy information stored in the relevancy information storage means, and performing the processing for providing access control to the detected other piece of information having the relevance.

10. A mobile terminal apparatus comprising an information processing apparatus according to one of the claims 1 to 9.
